# EUROPÄISCHE PATENTSCHRIFT

(11) **EP 3 948 233 B1**
(45) Veröffentlichungstag und Bekanntmachung des Hinweises auf die Patenterteilung: **03.01.2024**
(21) Anmeldenummer: 20717095.2
(22) Anmeldetag: 17.03.2020
(51) Int. Cl.: G01N 21/31, G01N 21/55, G01N 21/84, G01N 21/57

(54) **MESSLICHTQUELLE SOWIE MESSANORDNUNG ZUM ERFASSEN EINES REFLEXIONSSPEKTRUMS**
A MEASUREMENT LIGHT SOURCE AND A MEASUREMENT ARRANGEMENT FOR DETECTING A REFLECTION SPECTRUM
UNE SOURCE LUMIÈRE ET UN DISPOSITIF DE MESURE POUR LA DÉTERMINATION D'UN SPECTRE DE RÉFLEXION

(30) Priorität: 28.03.2019 DE 102019107963
(43) Veröffentlichungstag der Anmeldung: 09.02.2022
(73) Patentinhaber: Carl Zeiss Spectroscopy GmbH, 07745 Jena (DE)
(72) Erfinder: MARGRAF, Jörg, 07426 Königsee-Rottenbach (DE)
(74) Vertreter: Engel, Christoph Klaus
(86) Internationale Anmeldenummer: PCT/EP2020/057177
(87) Internationale Veröffentlichungsnummer: WO 2020/193263

(56) Entgegenhaltungen:
- EP-A1- 2 942 617
- EP-A2- 3 290 904
- US-A1- 2009 108 213
- US-B1- 6 324 330

## Beschreibung

Die vorliegende Erfindung betrifft eine Messlichtquelle zum Erzeugen von Messlicht mit einer gleichmäßigen räumlichen Beleuchtungsstärkeverteilung. Im Weiteren betrifft die Erfindung eine Messanordnung zum Erfassen zumindest eines absoluten Reflexionsspektrums einer Probe und bevorzugt auch zum Durchführen einer Referenzmessung. Die Messanordnung dient insbesondere zur spektroskopischen Untersuchung von Oberflächen in Produktionsprozessen, um beispielsweise Farbe oder Glanz der Oberflächen oder Schichtdicken zu bestimmen.

Die DE 10 2011 050 969 A1 zeigt eine Vorrichtung zur referenzierten Messung von reflektiertem Licht mit einem Hohlkörper, der in seinem Inneren eine diffus streuende Schicht aufweist und eine Lichtaustrittsöffnung besitzt. Die Vorrichtung ist von einer Messstellung in eine Kalibrierstellung umschaltbar, wodurch die Lichtaustrittsöffnung von einer ersten Detektionsachse in eine zweite Detektionsachse gebracht wird.

Aus der DE 10 2010 041 749 A1 ist eine Messeinrichtung mit einem sich in einer Längsrichtung erstreckenden Hohlraum bekannt, der eine einer Probe zuzuwendende Öffnung und einer Vielzahl von in der Längsrichtung angeordneten Öffnungen aufweist. Eine weitere Öffnung dient zum Einkoppeln von Licht.

Die US 6,422,718 B1, die DE 34 31 367 A1 und die DE 20 2008 012 222 U1 zeigen Messlichtquellen in verschiedenen Ausführungsformen.

Die US 2007/0171649 A1 zeigt ein Beschilderungssystem zur Bereitstellung von Werbung oder dergleichen. In einer ersten Ausführung umfasst das Schild einen Hohlraum in einem Gehäuse mit einer diffus reflektierenden Innenfläche an der Rückseite des Gehäuses. Eine Schildtafel an der Vorderseite des Gehäuses weist eine Öffnung auf, um die Emission von Licht aus dem Hohlraum zu ermöglichen.

Aus der US 2008/0146909 A1 ist eine optische Übertragungsvorrichtung bekannt, welche eine Kammer mit einem Lichteintritt und mit einem Lichtaustritt umfasst. Innere Oberflächen der Kammer sind diffuse reflektierend ausgeführt. Das gesamte Licht einer Lichtquelle soll durch eine erste Öffnung in die Kammer eintreten und dort diffus reflektiert werden, bevor es die Kammer über eine zweite Öffnung verlässt.

Die DE 10 2013 219 830 A1 lehrt ein optische Vorrichtung zur Reflexionsmessung unter diffuser Beleuchtung, die einen Hohlkörper mit einer lichtstreuenden Oberfläche in seinem Inneren und mit einer Lichtaustrittsöffnung umfasst. Die Lichtaustrittsöffnung besitzt eine rotationsasymmetrische Form.

Die DE 10 2014 215 193 A1 zeigt eine Messanordnung zur Erfassung eines absoluten Reflexionsspektrums einer Probe. Diese Messanordnung umfasst eine Lichtquelle und einen Homogenisator zur Erzeugung einer gleichmäßigen räumlichen Beleuchtungsstärkeverteilung des Messlichtes. Die Messanordnung umfasst weiterhin einen beweglichen Reflektor und einen Empfänger. Der Reflektor ist auf derselben Seite der die Probe wie die Lichtquelle angeordnet. Der Homogenisator ist bevorzugt durch eine Ulbricht-Kugel, durch eine Ulbricht-Röhre oder durch einen Kugel-Zylinder-Aufbau gebildet. Die Ulbricht-Kugel führt in dieser Messanordnung bei Probenabstandsänderungen oder bei Probenverkippungen zu Messfehlern der Absolutmessung von mehr als 1%, was für viele Anwendungen zu hoch ist. Außerhalb von Laborbedingungen, insbesondere bei Inline-Messungen in Produktionsprozessen sind Probenabstandsänderungen und Probenverkippungen jedoch nicht vermeidbar.

Die DE 10 2016 116 405 A1 und die EP 3 290 904 A2 betreffen eine Messlichtquelle zum Erzeugen von Messlicht mit einer gleichmäßigen räumlichen Beleuchtungsstärkeverteilung. Die Messlichtquelle umfasst einen Hohlkörper mit einer diffus reflektierenden Innenfläche. Im Hohlkörper sind ein konkaver, hohlspiegelförmiger Beleuchtungsraum, ein rohrartiger Lichtformungsraum und ein konkaver, hohlspiegelförmiger Lichtaustrittsraum ausgebildet, die eine gemeinsame Achse aufweisen. Im Beleuchtungsraum ist eine Lichtquelle zum Erzeugen von Licht zumindest teilweise angeordnet. Die Lichtquelle ist beispielsweise durch mindestens eine Halogenlampe und/oder mindestens eine LED gebildet. Der Lichtaustrittsraum weist einen Lichtaustritt auf. Der Beleuchtungsraum und der Lichtaustrittsraum stehen sich mit ihren Hohlspiegelformen gegenüber und sind durch den rohrartigen Lichtformungsraum verbunden. Im Hohlkörper ist eine diffus reflektierende Reflexionsscheibe zum Reflektieren des von der im Lichtaustrittsraum angeordneten Innenfläche des Hohlkörpers reflektierten Lichtes durch den Lichtaustritt nach außerhalb des Hohlkörpers angeordnet. Die EP 3 290 904 A2 zeigt zudem verschiedene Messanordnungen zum Erfassen eines absoluten Reflexionsspektrums einer Probe und zum Durchführen einer Referenzmessung.

Die US 2009/0108213 A1 zeigt eine Strahlungsquelle mit einer ersten Kammer und mit einer zweiten Kammer, zwischen denen sich ein Zwischenraum befindet. In der ersten Kammer sind mehrere Lichtquellen angeordnet. Das Licht der Lichtquellen wird an einer sphärischen Innenwand der ersten Kammer reflektiert und gelangt über eine Öffnung in den Zwischenraum und weiter in die zweite Kammer, wo das Licht an der sphärischen Innenwand der zweiten Kammer und an einer diffus reflektierenden, gekrümmten Oberfläche reflektiert wird und schließlich durch einen Ausgang austritt.

Die EP 2 942 617 A1 zeigt eine Beleuchtungseinrichtung mit einer Homogenisierungseinrichtung zur Verbindung mit einer Lichtquelle. Die Homogenisierungsvorrichtung weist eine Eintrittsöffnung, eine hinter der Eintrittsöffnung angeordnete Eintrittskammer, eine Zwischenkammer, eine Austrittskammer und eine hinter der Austrittskammer angeordnete Austrittsöffnung auf. Die Eintrittskammer erstreckt sich entlang einer ersten Hauptachse. Die Austrittskammer erstreckt sich entlang einer zweiten Hauptachse.

Die EP 3 290 904 A2 betrifft eine Messlichtquelle zum Erzeugen von Messlicht mit einer gleichmäßigen räumlichen Beleuchtungsstärkeverteilung. Die Messlichtquelle umfasst einen Hohlkörper mit einer diffus reflektierenden Innenfläche. Im Hohlkörper sind ein konkaver, hohlspiegelförmiger Beleuchtungsraum, ein rohrartiger Lichtformungsraum und ein konkaver, hohlspiegelförmiger Lichtaustrittsraum ausgebildet, die eine gemeinsame Achse aufweisen. Im Beleuchtungsraum ist eine Lichtquelle zum Erzeugen von Licht zumindest teilweise angeordnet. Der Lichtaustrittsraum weist einen Lichtaustritt auf.

Die US 6,324,330 B1 zeigt einen gefalteten Lichttunnel zum Bereitstellen von Licht mit einem hohen Maß an räumlicher Gleichmäßigkeit in einer kompakten Anordnung. Der Lichttunnel umfasst mehrere Prismen mit unterschiedlichen Querschnittsabmessungen und mindestens einem abgeschrägten Ende mit einer entsprechend abgeschrägten Endfläche. Die Vielzahl von Prismen ist nebeneinander in einem Stapel angeordnet, wobei jede abgeschrägte Endfläche benachbart zu einer anderen abgeschrägten Endfläche angeordnet ist, sodass von einem abgeschrägten Ende reflektiertes Licht von der benachbarten abgeschrägten Endfläche empfangen und in das benachbarte Prisma eingekoppelt wird.

Die Aufgabe der vorliegenden Erfindung besteht ausgehend vom Stand der Technik darin, eine Messanordnung zum Erfassen eines Reflexionsspektrums, insbesondere eine dafür geeignete Messlichtquelle zum Erzeugen von Messlicht mit einer gleichmäßigen räumlichen Beleuchtungsstärkeverteilung zur Verfügung zu stellen, welche deutlich kompakter als eine Ulbricht-Kugel ausführbar ist.

Die genannte Aufgabe wird gelöst durch eine Messlichtquelle gemäß dem beigefügten Anspruch 1 sowie durch eine Messanordnung gemäß dem beigefügten nebengeordneten Anspruch 14.

Die erfindungsgemäße Messlichtquelle dient zum Erzeugen von Messlicht mit einer gleichmäßigen räumlichen Beleuchtungsstärkeverteilung. Mit der erfindungsgemäßen Messlichtquelle können beispielsweise spektrometrische Untersuchungen von Oberflächen vorgenommen werden.

Die Messlichtquelle umfasst einen massiven Block, in welchem ein Beleuchtungsraum, ein Lichtformungsraum und ein Lichtaustrittsraum ausgebildet sind. Der Beleuchtungsraum, der Lichtformungsraum und der Lichtaustrittsraum sind jeweils als ein Hohlraum im Block ausgebildet. Der Beleuchtungsraum, der Lichtformungsraum und der Lichtaustrittsraum besitzen jeweils eine diffus reflektierende Innenfläche zur Erzeugung bzw. Weiterleitung von diffusem Licht. Der Beleuchtungsraum mündet in den Lichtformungsraum, sodass Licht vom Beleuchtungsraum in den Lichtformungsraum eintreten kann. Der Lichtformungsraum mündet in den Lichtaustrittsraum, sodass Licht vom Lichtformungsraum in den Lichtaustrittsraum eintreten kann.

In dem Beleuchtungsraum ist mindestens eine Lichtquelle zum Erzeugen von Licht zumindest teilweise angeordnet. Die mindestens eine Lichtquelle ist jedenfalls so angeordnet, dass durch sie Licht in den Beleuchtungsraum strahlbar ist, wobei sich die mindestens eine Lichtquelle teilweise außerhalb des Beleuchtungsraumes befinden kann.

Der Lichtaustrittsraum weist einen Lichtaustritt auf, durch welchen Licht aus dem Lichtaustrittsraum nach außerhalb des Blockes treten kann. Das aus dem Lichtaustritt tretende Licht bildet das durch die Messlichtquelle erzeugbare Messlicht. Eine Achse des Beleuchtungsraumes und eine Achse des Lichtaustrittsraumes sind beabstandet zueinander angeordnet. Die Achse des Beleuchtungsraumes ist durch eine mittlere Achse des Beleuchtungsraumes gebildet. Die Achse des Lichtaustrittsraumes ist durch eine mittlere Achse des Lichtaustrittsraumes gebildet. Eine Achse des Lichtaustrittes und die Achse des Lichtaustrittsraumes fallen bevorzugt zusammen. Der Beleuchtungsraum ist für eine Lichtausbreitung des diffusen Lichtes in einer ersten Lichtausbreitungsrichtung im Beleuchtungsraum ausgebildet, welche in der Achse des Beleuchtungsraumes liegt. Der Lichtaustrittsraum ist für eine Lichtausbreitung des diffusen Lichtes in einer zweiten Lichtausbreitungsrichtung im Lichtaustrittsraum ausgebildet, welche in der Achse des Lichtaustrittsraumes liegt. Die mittlere Achse des Beleuchtungsraumes und die mittlere Achse des Lichtaustrittsraumes sind so weit beabstandet zueinander angeordnet, dass der Beleuchtungsraum und der Lichtaustrittsraum nebeneinander bzw. übereinander angeordnet sind.

Erfindungsgemäß ist der Lichtformungsraum für eine Umkehr einer Lichtausbreitungsrichtung des diffusen Lichtes ausgebildet. Folglich erfährt das von dem Beleuchtungsraum in den Lichtformungsraum eintretende Licht bei seiner Ausbreitung durch den Lichtformungsraum eine Umkehr seiner Lichtausbreitungsrichtung, sodass es mit einer umgekehrten Lichtausbreitungsrichtung vom Lichtformungsraum in den Lichtaustrittsraum tritt.

Ein besonderer Vorteil der erfindungsgemäßen Messlichtquelle besteht darin, dass sie sehr kompakt ausgeführt werden kann, da der Beleuchtungsraum und der Lichtaustrittsraum nebeneinander bzw. übereinander angeordnet sein können und der Lichtformungsraum axial benachbart angeordnet sein kann. Hierdurch kann der Bauraum optimal genutzt werden.

Das mit der erfindungsgemäßen Messlichtquelle erzeugbare Messlicht weist in seiner räumlichen Beleuchtungsstärkeverteilung eine Abweichung von bevorzugt höchstens 0,2% auf. Hierdurch ist ein Inline-Einsatz der Messlichtquelle bei einer Messung eines absoluten Reflexionsspektrums möglich, da eine Probenabstandsvarianz, eine Probendickevariation und eine Probenverkippung tolerierbar sind.

Das durch die Lichtquelle erzeugbare Licht wird im Beleuchtungsraum, im Lichtformungsraum und im Lichtaustrittsraum bevorzugt mindestens drei Mal reflektiert, bevor es aus dem Lichtaustritt tritt. Das durch die Lichtquelle erzeugbare Licht wird im Beleuchtungsraum, im Lichtformungsraum und im Lichtaustrittsraum bevorzugt mindestens vier Mal reflektiert, bevor es aus dem Lichtaustritt tritt. Ein überwiegender Teil des durch die Lichtquelle erzeugbaren Lichtes wird im Beleuchtungsraum, im Lichtformungsraum und im Lichtaustrittsraum bevorzugt viele Mal reflektiert, bevor es aus dem Lichtaustritt tritt.

Die erste Lichtausbreitungsrichtung und die zweite Lichtausbreitungsrichtung sind entgegengesetzt zueinander ausgerichtet. Die erste Lichtausbreitungsrichtung und die zweite Lichtausbreitungsrichtung weisen einen Winkel zueinander auf, welcher 180°±30° beträgt, weiter bevorzugt 180°±15° beträgt, und besonders bevorzugt 180° beträgt.

Der Lichtformungsraum verbindet den Beleuchtungsraum mit dem Lichtaustrittsraum bevorzugt U-förmig bzw. V-förmig.

Die mittlere Achse des Beleuchtungsraumes und die mittlere Achse des Lichtaustrittsraumes sind bevorzugt parallel zueinander angeordnet. Der Beleuchtungsraum und der Lichtaustrittsraum weisen bevorzugt eine gleiche axiale Position, d. h. eine gleiche Position in der axialen Richtung auf. Somit sind der Beleuchtungsraum und der Lichtaustrittsraum nebeneinander bzw. übereinander und ohne Versatz in der axialen Richtung angeordnet. Insoweit bilden der Beleuchtungsraum, der Lichtformungsraum und der Lichtaustrittsraum eine U-Form oder eine V-Form aus, wobei der Beleuchtungsraum und der Lichtaustrittsraum die Schenkel der U-Form bzw. V-Form bilden. Bei bevorzugten Ausführungsformen der erfindungsgemäßen Messlichtquelle ist an einem Übergang von dem Lichtformungsraum zu dem Lichtaustrittsraum ein Homogenisatorelement angeordnet. Das Homogenisatorelement weist eine diffus reflektierende Beleuchtungsfläche auf. Das Homogenisatorelement ist zum Reflektieren des von der Innenfläche des Lichtaustrittsraumes reflektierten Lichtes durch den Lichtaustritt nach außerhalb des Blockes ausgebildet. Das Homogenisatorelement ist bevorzugt in der mittleren

Achse des Lichtaustrittsraumes und senkrecht zu dieser Achse angeordnet. Das Homogenisatorelement steht in dieser Achse bevorzugt dem Lichtaustritt gegenüber. Schaut man von außen durch den Lichtaustritt in den Lichtaustrittsraum, so blickt man auf das Homogenisatorelement. Der Übergang vom Lichtformungsraum zum Lichtaustrittsraum ist in einem bezogen auf die Achse des Lichtaustrittsraumes radial mittleren Abschnitt bevorzugt durch das Homogenisatorelement visuell verdeckt, wobei ein radial äußerer Abschnitt einen Lichtdurchtritt vom Lichtformungsraum in den Lichtaustrittsraum bildet.

Das Homogenisatorelement besitzt bevorzugt die Form einer ebenen oder gewölbten Scheibe. Die gewölbte Scheibe ist bevorzugt sphärisch gewölbt.

Das Homogenisatorelement ist bevorzugt an einem Steg angebracht, welcher in einer mittleren Ebene des Lichtaustrittsraumes angeordnet ist. Die mittlere Ebene des Lichtaustrittsraumes bildet bevorzugt auch eine mittlere Ebene des Beleuchtungsraumes und/oder eine mittlere Ebene des Lichtformungsraumes.

Der Beleuchtungsraum weist bevorzugt mindestens einen Lichteintritt auf, in welchem die mindestens eine Lichtquelle zumindest teilweise angeordnet ist. Der mindestens eine Lichteintritt ist bevorzugt durch eine Öffnung des Blockes gebildet, in welcher die mindestens eine Lichtquelle angeordnet ist.

Der Beleuchtungsraum weist bevorzugt zwei der Lichteintritte auf, nämlich einen ersten Lichteintritt und einen zweiten Lichteintritt. Der erste Lichteintritt und der zweite Lichteintritt sind bevorzugt nebeneinander angeordnet. In jedem der Lichteintritte ist mindestens eine der Lichtquellen angeordnet. In einem oder beiden der Lichteintritte können jeweils auch mehrere der Lichtquellen angeordnet sein. Auch kann der Beleuchtungsraum mehr als zwei der Lichteintritte aufweisen. Die mehr als zwei Lichteintritte können in zwei benachbarten Gruppen angeordnet sein.

Die beiden Lichteintritte bzw. die beiden Gruppen der Lichteintritte stellen zwei Kanäle für die Beleuchtung dar. Die zweikanalige Beleuchtung erlaubt beispielsweise die Auswahl aus unterschiedlichen Beleuchtungsspektren. Durch die zweikanalige Beleuchtung kann u. a. auch einer thermischen Überlastung der Messlichtquelle vorgebeugt werden. Die beiden Kanäle können abwechselnd genutzt werden. Bezogen auf die mittlere Ebene des Lichtaustrittsraumes, welche bevorzugt auch die mittlere Ebene des Beleuchtungsraumes und des Lichtformungsraumes bildet, ist der massive Block mit dem Beleuchtungsraum, dem Lichtformungsraum und dem Lichtaustrittsraum bevorzugt symmetrisch ausgebildet.

Eine Verbindungslinie zwischen den beiden Lichteintritten bzw. eine Verbindungslinie zwischen den beiden Gruppen der Lichteintritte ist bevorzugt senkrecht zu der mittleren Ebene des Lichtaustrittsraumes angeordnet.

Bei bevorzugten Ausführungsformen der erfindungsgemäßen Messlichtquelle sind im ersten Lichteintritt bzw. in der ersten Gruppe der Lichteintritte und im zweiten Lichteintritt bzw. in der zweiten Gruppe der Lichteintritte jeweils eine Halogenlampe und mehrere LEDs angeordnet, welche die Lichtquellen der Messlichtquelle bilden. Hierbei handelt es sich bevorzugt um jeweils eine Halogenlampe und mehrere LEDs, bevorzugt mindestens vier LEDs und weiter bevorzugt mindestens 10 LEDs. Alternativ bevorzugt ist im ersten Lichteintritt bzw. in der ersten Gruppe der Lichteintritte mindestens eine Halogenlampe angeordnet, welche eine der Lichtquellen bildet, wohingegen im zweiten Lichteintritt bzw. in der zweiten Gruppe der Lichteintritte mehrere LEDs angeordnet sind, welche weitere der Lichtquellen der Messlichtquelle bilden. Im zweiten Lichteintritt bzw. in der zweiten Gruppe der Lichteintritte sind bevorzugt mindestens vier LEDs und weiter bevorzugt mindestens 10 LEDs angeordnet.

Die mehreren LEDs, insbesondere die mindestens vier LEDs weisen in ihrer Summe ein Emissionsspektrum auf, welches bevorzugt den sichtbaren Bereich des Lichtes und weiter bevorzugt den Bereich von 340 nm bis 1.100 nm und nochmals weiter bevorzugt den Bereich von 340 nm bis 1.620 nm abdeckt.

Die mindestens eine Lichtquelle kann auch durch eine Blitzlampe, durch eine Xenon-Blitzlampe, durch eine Deuteriumlampe, durch einen IR-Strahler, durch eine weißleuchtende LED, durch eine UV-Kathode oder durch eine UV-LED gebildet sein. Die Lichtquelle kann auch einen oder mehrere Lichtwellenleiter umfassen, über welchen bzw. über welche das Licht in den Beleuchtungsraum strahlen kann. Insoweit kann beispielsweise die Halogenlampe außerhalb des Beleuchtungsraumes angeordnet sein. Jedenfalls mündet der Lichtwellenleiter bzw. münden die Lichtwellenleiter als Teile der Lichtquelle in den Beleuchtungsraum, sodass die Lichtquelle teilweise im Beleuchtungsraum angeordnet ist.

Das Homogenisatorelement weist im Falle der zweikanaligen Beleuchtung bevorzugt zwei seitliche Erweiterungen auf, um zu verhindern, dass Licht aus den beiden Kanälen, welches nur wenige Male reflektiert wurde, in den Lichtaustrittsraum gelangt. Eine Verbindungslinie zwischen den seitlichen Erweiterungen ist bevorzugt senkrecht zu der mittleren Ebene des Lichtaustrittsraumes angeordnet.

Die Messlichtquelle umfasst bevorzugt eine Linse, welche außerhalb des Blockes vor dem Lichtaustritt angeordnet ist. Durch die Linse wird der Strahl des aus dem Lichtaustritt austretenden Messlichtes vergrößert, um größere Flächen ausleuchten zu können. Ein besonderer Vorteil der erfindungsgemäßen Messlichtquelle besteht darin, dass sie klein ausgeführt werden kann, was dazu führt, dass auch der Lichtaustritt klein ist. Der kleine Lichtaustritt kann für einige Anwendungen zu klein sein. Durch die Linse kann der Strahl des aus dem Lichtaustritt austretenden Lichtes vergrößert werden.

Bei bevorzugten Ausführungsformen der erfindungsgemäßen Messlichtquelle weist der massive Block die Grundform eines Quaders oder eines Würfels auf, der zwei abgeschrägte Kanten aufweist, welche Außenflächen des Lichtformungsraumes bilden.

Bei bevorzugten Ausführungsformen der erfindungsgemäßen Messlichtquelle umfasst der massive Block mindestens zwei Teilblöcke, welche fest miteinander verbunden sind. Insbesondere im Falle der zweikanaligen Beleuchtung umfasst der massive Block bevorzugt drei der Teilblöcke, welche fest miteinander verbunden sind. Eine Verbindungsebene zwischen einem ersten der drei Teilblöcke und einem mittleren zweiten der drei Teilblöcke schneidet den ersten Lichteintritt. Eine Verbindungsebene zwischen dem mittleren zweiten der drei Teilblöcke und einem dritten der drei Teilblöcke schneidet den zweiten Lichteintritt. Die Verbindungsebene zwischen dem ersten Teilblock und dem zweiten Teilblock und die Verbindungsebene zwischen dem zweiten Teilblock und dem dritten Teilblock sind bevorzugt parallel zueinander ausgerichtet. Die Verbindungsebene zwischen dem ersten Teilblock und dem zweiten Teilblock und die Verbindungsebene zwischen dem zweiten Teilblock und dem dritten Teilblock sind bevorzugt parallel zu der mittleren Ebene des Lichtaustrittsraumes angeordnet. Der Lichtaustritt ist bevorzugt in dem mittleren zweiten Teilblock ausgebildet. Das Homogenisatorelement und ggf. der Steg sind bevorzugt in dem mittleren zweiten Teilblock ausgebildet.

Bei bevorzugten Ausführungsformen der erfindungsgemäßen Messlichtquelle besteht der Block bzw. bestehen die Teilblöcke aus Polytetrafluorethylen (PTFE). Dieses Material ist sehr gut diffus reflektierend. Der Beleuchtungsraum, der Lichtformungsraum und der Lichtaustrittsraum weisen eine diffus reflektierende Oberfläche mit einem Reflexionsgrad auf, welcher im gesamten Lichtspektrum bevorzugt mindestens 96% und besonders bevorzugt mindestens 98% beträgt.

Ein besonderer Vorteil der erfindungsgemäßen Messlichtquelle besteht darin, dass sie klein ausgeführt werden kann. Der Block weist entsprechend Außenkanten auf, deren Längen bevorzugt nicht mehr als 90 mm, weiter bevorzugt nicht mehr als 70 mm betragen. Zwischen dem Beleuchtungsraum, dem Lichtformungsraum und dem Lichtaustrittsraum weist das Material des massiven Blockes, insbesondere das Polytetrafluorethylen, eine Wandstärke auf, welche bevorzugt nicht mehr als 12 mm und weiter bevorzugt nicht mehr als 10 mm beträgt. Diese Wandstärke beträgt bevorzugt mindestens 6 mm.

Die erfindungsgemäße Messanordnung dient zum Erfassen eines absoluten Reflexionsspektrums einer Probe. Die Messanordnung dient beispielsweise für eine Inline-Messung in einem Produktionsprozess für große beschichtete Flächen, wie Glasscheiben oder Folien zur Prüfung der Oberfläche. Für das Erfassen des absoluten Reflexionsspektrums ist eine Referenzprobe bevorzugt nicht erforderlich. Die Messanordnung erlaubt daher bevorzugt auch eine Referenzmessung eines verwendeten Messlichtes.

Die Messanordnung umfasst zunächst die erfindungsgemäße Messlichtquelle zum Erzeugen des Messlichtes mit einer gleichmäßigen räumlichen Beleuchtungsstärkeverteilung.

Die Messanordnung umfasst weiterhin einen optischen Empfänger zum Empfangen von Licht, welcher zu der Messlichtquelle gegenüberliegend angeordnet ist. Bei dem zu empfangenden Licht handelt es sich um das Messlicht der Messlichtquelle, nachdem es einen Weg über die Probe oder über einen Referenzweg genommen hat. Eine Eintrittsöffnung des Empfängers und eine Austrittsöffnung der Messlichtquelle sind abgesehen von einem Versatz aufeinander zu gerichtet. Der optische Empfänger ist bevorzugt auf einer Achse des Beleuchtungsraumes angeordnet.

Die Messanordnung ist dazu ausgebildet, parallel zu einer Oberfläche der Probe angeordnet zu werden. Insbesondere ist die Achse des Lichtaustrittsraumes parallel zur Oberfläche der Probe anzuordnen, nämlich mit einem Versatz zur Oberfläche der Probe.

Die Messanordnung umfasst ersten Spiegel, der auf einer Achse des Lichtaustrittes der Messlichtquelle angeordnet ist und zum Reflektieren des aus dem Lichtaustritt austretenden Messlichtes der Messlichtquelle ausgerichtet ist. Der erste Spiegel ist bevorzugt starr angeordnet. Der erste Spiegel weist bevorzugt eine sphärische Wölbung auf. Zwischen dem Lichtaustritt und dem ersten Spiegel ist bevorzugt die beschriebene Linse zur Vergrößerung des Strahles des aus dem Lichtaustritt austretenden Messlichtes angeordnet.

Die Messanordnung umfasst zudem einen zweiten Spiegel, der auf einer Achse des optischen Empfängers angeordnet ist und zum Reflektieren von reflektiertem Messlicht auf den optischen Empfänger ausgerichtet ist. Der zweite Spiegel ist bevorzugt starr angeordnet. Der zweite Spiegel ist bevorzugt auf der Achse des Beleuchtungsraumes angeordnet. Der zweite Spiegel ist bevorzugt zwischen dem Beleuchtungsraum und dem optischen Empfänger angeordnet.

Die Messanordnung umfasst bevorzugt einen dritten Spiegel, der in mindestens zwei Stellungen stellbar ist, wofür der dritte Spiegel schwenkbar ist. Der dritte Spiegel ist bevorzugt in mindestens drei Stellungen stellbar. Der dritte Spiegel ist bevorzugt zwischen dem ersten Spiegel und dem zweiten Spiegel angeordnet. In einer ersten Stellung des dritten Spiegels ist dieser dazu ausgerichtet, einen Strahlengang vom ersten Spiegel zum optischen Empfänger zu richten. In einer zweiten Stellung des dritten Spiegels ist dieser dazu ausgerichtet, Messlicht, welches von dem zweiten Spiegel auf den optischen Empfänger gerichtet ist, freizugeben. In einer dritten Stellung des dritten Spiegels ist dieser dazu ausgerichtet, von der Probe reflektiertes Messlicht zum optischen Empfänger zu richten. Die Messanordnung umfasst bevorzugt einen vierten Spiegel.

Der optische Empfänger ist bevorzugt durch einen optischen Sensor, wie insbesondere ein Spektrometer, oder zumindest durch einen optischen Eingang des optischen Sensors gebildet.

Beispielsweise kann der optische Empfänger durch eine Eingangsoptik gebildet sein, an welche ein Lichtwellenleiter angeschlossen ist, der zu einem Spektrometer führt.

Die Messlichtquelle, der optische Empfänger, der erste Spiegel, der zweite Spiegel und ggf. der dritte Spiegel bilden bevorzugt einen Messkopf. Der Messkopf umfasst ein Gehäuse, in welchem die Messlichtquelle, der Empfänger, der erste Spiegel, der zweite Spiegel und ggf. der dritte Spiegel angeordnet sind. Das Gehäuse weist eine Messöffnung auf, durch welche das vom ersten Spiegel reflektierte Messlicht nach außen treten kann und durch welche das von der Probe reflektierte Messlicht nach innen insbesondere zum zweiten Spiegel treten kann.

Bevorzugt sind mehrere der Messköpfe nebeneinander angeordnet, um ein Messsystem auszubilden. Mit dem Messsystem können Messdaten engmaschig über die gesamte Breite einer Probe spurweise erhoben werden.

Die Messlichtquelle der erfindungsgemäßen Messanordnung ist bevorzugt durch eine der beschriebenen bevorzugten Ausführungsformen der erfindungsgemäßen Messlichtquelle gebildet. Im Übrigen weist die erfindungsgemäße Messanordnung bevorzugt auch weitere Merkmale auf, die im Zusammenhang mit der erfindungsgemäßen Messlichtquelle und deren bevorzugten Ausführungsformen angegeben sind.

Weitere Einzelheiten und Weiterbildungen der Erfindung ergeben sich aus der nachfolgenden Beschreibung bevorzugter Ausführungsformen der Erfindung, unter Bezugnahme auf die Zeichnung. Es zeigen:
- Fig. 1:: eine seitliche Ansicht einer bevorzugten Ausführungsform einer erfindungsgemäßen Messlichtquelle;
- Fig. 2:: die in Fig. 1 gezeigte Messlichtquelle in einer Ansicht von oben;
- Fig. 3:: die in Fig. 1 gezeigte Messlichtquelle in einer ersten Querschnittsansicht;
- Fig. 4:: die in Fig. 1 gezeigte Messlichtquelle in einer zweiten Querschnittsansicht;
- Fig. 5:: die in Fig. 1 gezeigte Messlichtquelle in einer dritten Querschnittsansicht;
- Fig. 6:: die in Fig. 1 gezeigte Messlichtquelle in einer perspektivischen Schnittansicht;
- Fig. 7:: eine vereinfachte Schnittansicht einer bevorzugten Ausführungsform einer erfindungsgemäßen Messanordnung während einer Bypass-Messung;
- Fig. 8:: die in Fig. 7 gezeigte Messanordnung während einer Transmissionsmessung;
- Fig. 9:: die in Fig. 7 gezeigte Messanordnung während einer Reflexionsmessung; und
- Fig. 10:: die in Fig. 7 gezeigte Messanordnung während einer Dunkelmessung;.

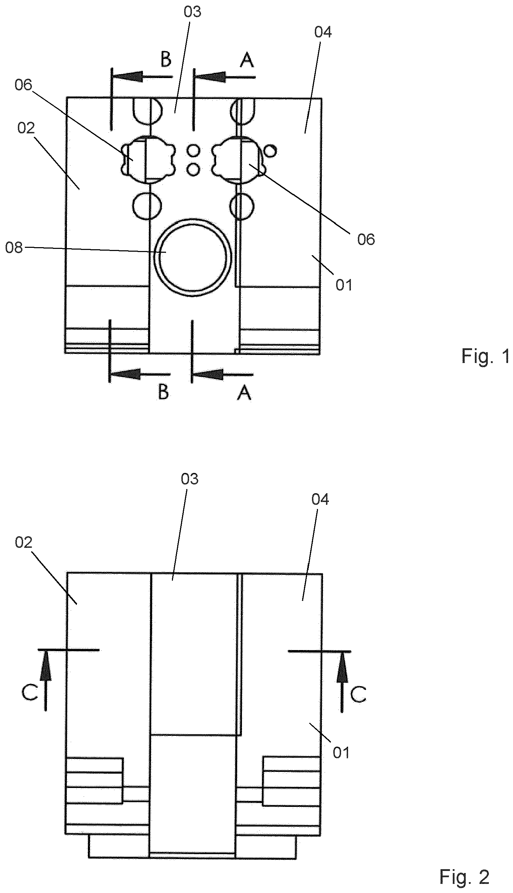

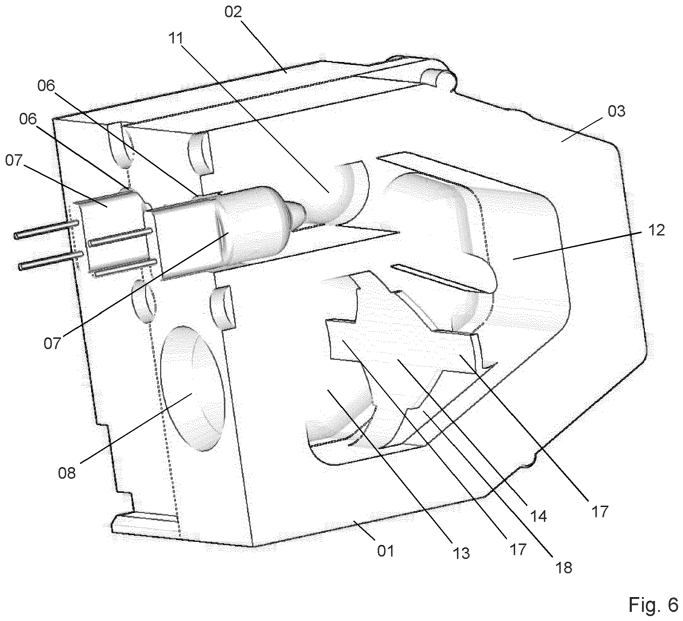

Fig. 1 zeigt eine seitliche Ansicht einer bevorzugten Ausführungsform einer erfindungsgemäßen Messlichtquelle. Die Messlichtquelle umfasst einen massiven Block 01 aus PTFE. Der Block 01 besteht aus einem ersten Teilblock 02, einem zweiten Teilblock 03 und einem dritten Teilblock 04, welche fest miteinander verbunden oder monolithisch ausgebildet sind. Der Block 01 weist zwei nebeneinander angeordnete Lichteintritte 06 auf, in welchen jeweils eine Lichtquelle 07 (gezeigt in Fig. 6) angeordnet ist. Der Block 01 weist zudem einen Lichtaustritt 08 auf, aus welchem das von der Messlichtquelle erzeugte Licht austritt.

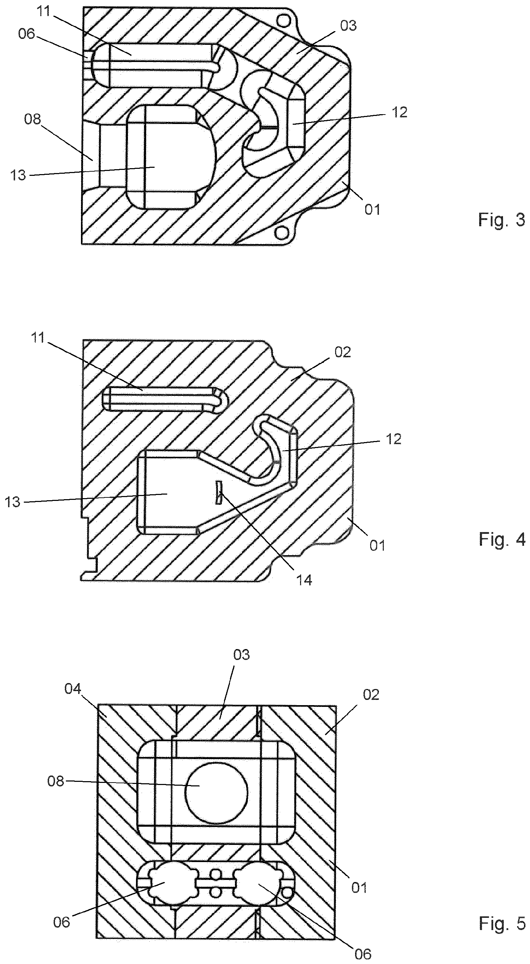

Es sind weiterhin Schnittmarken AA für eine in Fig. 3 gezeigte Querschnittsansicht und Schnittmarken BB für eine in Fig. 4 gezeigte Querschnittsansicht dargestellt.

Fig. 2 zeigt die in Fig. 1 gezeigte Messlichtquelle in einer Ansicht von oben. Es sind Schnittmarken CC für eine in Fig. 5 gezeigte Querschnittsansicht dargestellt.

Fig. 3 zeigt die in Fig. 1 gezeigte Messlichtquelle in einer ersten Querschnittsansicht AA. In dieser Querschnittsansicht ist das Innere des Blockes 01 dargestellt, nämlich ein Beleuchtungsraum 11, ein Lichtformungsraum 12 und ein Lichtaustrittsraum 13, welche jeweils durch einen Hohlraum im Block 01 gebildet sind. Der Beleuchtungsraum 11, der Lichtformungsraum 12 und der Lichtaustrittsraum 13 weisen eine diffus reflektierende Oberfläche mit einem Reflexionsgrad im gesamten Lichtspektrum von mindestens 98% auf. Der Lichteintritt 06 bildet einen Eingang in den Beleuchtungsraum 11. Der Beleuchtungsraum 11 mündet in den Lichtformungsraum 12. Der Lichtformungsraum 12 mündet in den Lichtaustrittsraum 13. Der Lichtformungsraum 12 stellt eine U-förmige Verbindung zwischen dem Beleuchtungsraum 11 und dem Lichtaustrittsraum 13 dar. Hierdurch sind der Beleuchtungsraum 11 und der Lichtaustrittsraum 13 raumsparend übereinander angeordnet. Der Lichtformungsraum 12 ist seitlich neben dem Beleuchtungsraum 11 und dem Lichtaustrittsraum 13 angeordnet.

Fig. 4 zeigt die in Fig. 1 gezeigte Messlichtquelle in einer zweiten Querschnittsansicht BB. In dieser Querschnittsansicht sind wiederum der Beleuchtungsraum 11, der Lichtformungsraum 12 und der Lichtaustrittsraum 13 dargestellt, wobei diese im Vergleich zu den Darstellungen in Fig. 3 einen kleineren Querschnitt aufweisen. In dieser Querschnittsansicht ist ein Homogenisatorelement 14 in Form einer sphärischen Scheibe dargestellt, welches sich im Lichtaustrittsraum 13 befindet und gegenüber dem Lichtaustritt 08 (gezeigt in Fig. 3) angeordnet ist.

Fig. 5 zeigt die in Fig. 1 gezeigte Messlichtquelle in einer dritten Querschnittsansicht CC. In dieser Querschnittsansicht sind u. a. die Lichteintritte 06 und der Lichtaustritt 08 dargestellt.

Fig. 6 zeigt die in Fig. 1 gezeigte Messlichtquelle in einer perspektivischen Schnittansicht. In dieser perspektivischen Schnittansicht sind die räumlichen Ausdehnungen des Beleuchtungsraumes 11, des Lichtformungsraumes 12 und des Lichtaustrittsraumes 13 dargestellt. In den beiden Lichteintritten 06 ist jeweils eine der beiden Lichtquellen 07 angeordnet, welche bei der gezeigten Ausführungsform beispielhaft durch Halogenlampen gebildet sind. Durch die zwei Lichtquellen 07 ergibt sich eine zweikanalige Ausführung der Messlichtquelle. Entsprechend weisen der Beleuchtungsraum 11, der Lichtformungsraum 12 und der Lichtaustrittsraum 13 eine entsprechende Ausdehnung senkrecht zu der hier gezeigten Querschnittsebene auf, d. h. der Beleuchtungsraum 11, der Lichtformungsraum 12 und der Lichtaustrittsraum 13 sowie die Messlichtquelle in ihrer Gesamtheit weisen eine erhöhte Breite für die zweikanalige Ausführung auf.

In dieser perspektivischen Schnittansicht ist zudem das Homogenisatorelement 14 dargestellt. Das Homogenisatorelement 14 weist zwei seitliche rechteckförmige Erweiterungen 17 auf, die verhindern, dass Licht aus den beiden Kanälen, welches nur wenige Male reflektiert wurde, in den Lichtaustrittsraum 13 gelangt. Das Homogenisatorelement 14 wird durch einen Steg 18 im mittleren zweiten Teilblock 03 gehalten.

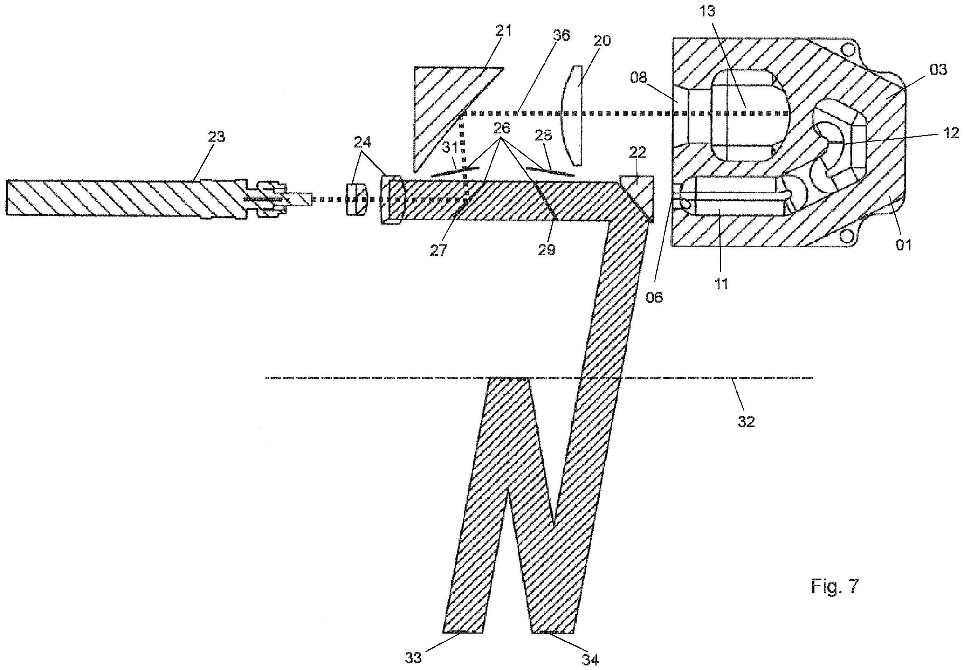

Fig. 7 zeigt eine vereinfachte Schnittansicht einer bevorzugten Ausführungsform einer erfindungsgemäßen Messanordnung während einer Bypass-Messung. Die Messanordnung weist die in Fig. 1 gezeigte Messlichtquelle auf, umfassend u. a. den Block 01 mit dem Beleuchtungsraum 11, dem Lichtformungsraum 12 und dem Lichtaustrittsraum 13 sowie den Lichteintritten 06 und dem Lichtaustritt 08. Die Messlichtquelle umfasst zudem eine Linse 20 zur Vergrößerung des Strahles des aus dem Lichtaustritt 08 austretenden Messlichtes. Die Messanordnung umfasst einen ersten Spiegel 21, auf welchen das durch die Linse 20 hindurchgetretene Messlicht fällt. Der erste Spiegel 21 ist sphärisch gewölbt und fest angeordnet. Die Messanordnung umfasst zudem einen zweiten Spiegel 22, welcher auf einen optischen Empfänger 23 gerichtet ist. Vor dem optischen Empfänger 23 sind Linsen 24 angeordnet, welche das reflektierte Messlicht bündeln. Die Messanordnung umfasst zudem einen dritten Spiegel 26, welcher in seiner Ausrichtung verstellbar ist und in einer ersten Stellung 27, in einer zweiten Stellung 28, in einer dritten Stellung 29 und in einer vierten Stellung 31 dargestellt ist.

Eine Probe (nicht dargestellt) ist in einer Probenebene 32 anzuordnen.

Die Messanordnung umfasst weiterhin einen Schwarzstandard 33 und einen Gegenspiegel 34, welche unter der Probenebene 32 angeordnet sind.

Es ist ein Strahlengang 36 des Messlichtes dargestellt, welcher bei der Bypass-Messung auftritt, um eine 100%-Weiß-Messung vornehmen zu können, wodurch die Messanordnung auf 100%-Weiß der Messlichtquelle abgeglichen werden kann. Demzufolge dient die erste Stellung 27 des dritten Spiegels 26 zur Bypass-Messung.

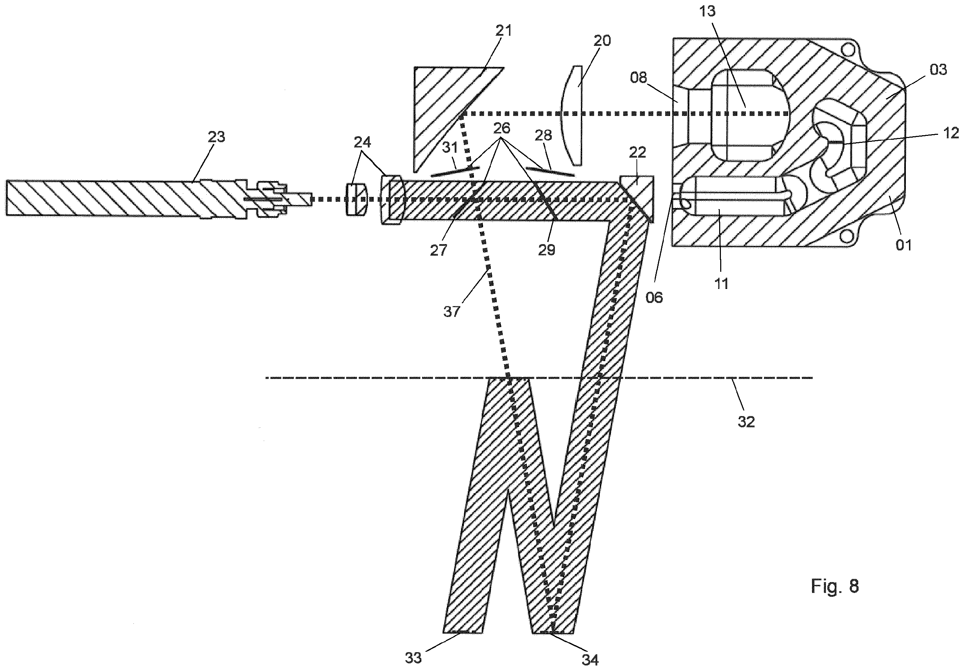

Fig. 8 zeigt die in Fig. 7 gezeigte Messanordnung während einer Transmissionsmessung. Es ist ein Strahlengang 37 des Messlichtes dargestellt, welcher bei dieser Transmissionsmessung auftritt. Der Strahlengang 37 durchläuft die Probe (nicht dargestellt) in der Probenebene 32 und wird am Gegenspiegel 34 und am zweiten Spiegel 22 reflektiert. Der dritte Spiegel 26 befindet sich in seiner zweiten Stellung 28, wodurch er den Strahlengang 37 freigibt. Demzufolge dient die zweite Stellung 28 des dritten Spiegels 26 zur Transmissionsmessung.

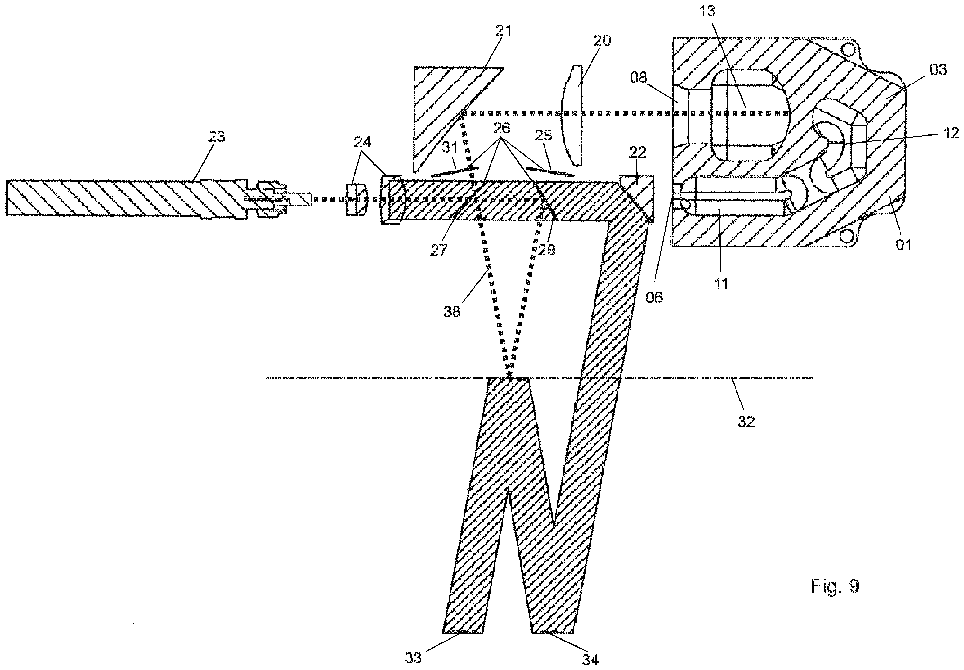

Fig. 9 zeigt die in Fig. 7 gezeigte Messanordnung während einer Reflexionsmessung. Es ist ein Strahlengang 38 des Messlichtes dargestellt, welcher bei dieser Reflexionsmessung auftritt. Der Strahlengang 38 wird von der Probe (nicht dargestellt) in der Probenebene 32 und am dritten Spiegel 26 reflektiert, welcher sich in seiner dritten Stellung 29 befindet. Demzufolge dient die dritte Stellung 29 des dritten Spiegels 26 zur Reflexionsmessung.

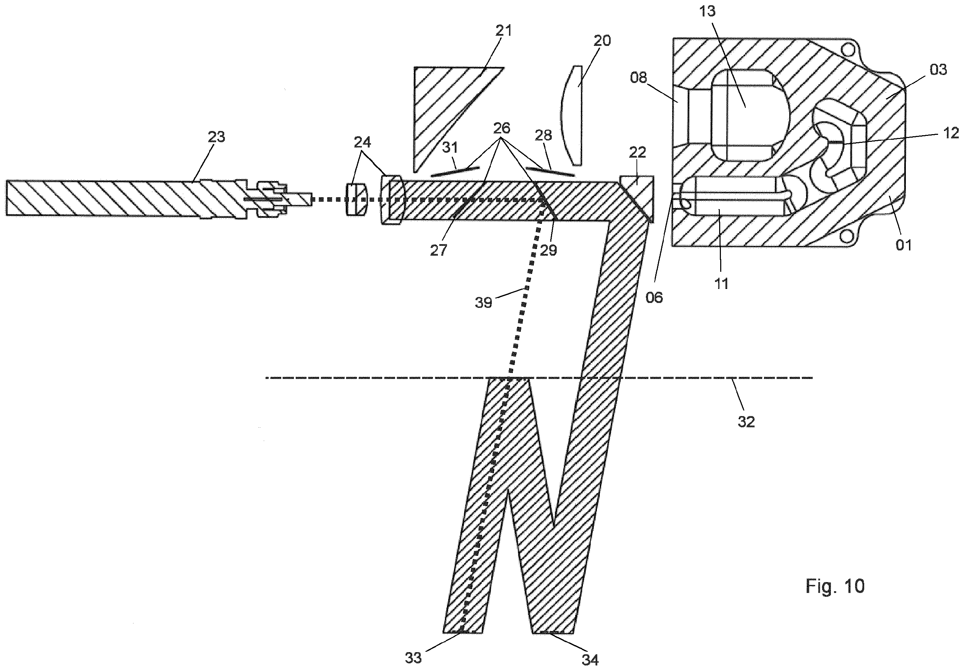

Fig. 10 zeigt die in Fig. 7 gezeigte Messanordnung während einer Dunkelmessung. Es ist ein Strahlengang 39 dargestellt, welcher symbolisiert, dass der optische Empfänger 23 über den dritten Spiegel 26, welcher sich in dritten Stellung 29 befindet, auf den Schwarzstandard 33 gerichtet ist. Demzufolge dient die dritte Stellung 29 des dritten Spiegels 26 auch zur Dunkelmessung.

### Bezugszeichenliste

- 01: massiver Block
- 02: erster Teilblock
- 03: zweiter Teilblock
- 04: dritter Teilblock
- 05: -
- 06: Lichteintritt
- 07: Lichtquelle
- 08: Lichtaustritt
- 09: -
- 10: -
- 11: Beleuchtungsraum
- 12: Lichtformungsraum
- 13: Lichtaustrittsraum
- 14: Homogenisatorelement
- 15: -
- 16 17: seitliche Erweiterung
- 18: Steg
- 19: -
- 20: Linse
- 21: erster Spiegel
- 22: zweiter Spiegel
- 23: optische Empfänger
- 24: Linsen
- 25: -
- 26: dritter Spiegel
- 27: erste Stellung
- 28: zweite Stellung
- 29: dritte Stellung
- 30: -
- 31: vierte Stellung
- 32: Probenebene
- 33: Schwarzstandard
- 34: Gegenspiegel
- 35: -
- 36: Strahlengang bei Bypass-Messung
- 37: Strahlengang bei Transmissionsmessung
- 38: Strahlengang bei Reflexionsmessung
- 39: Strahlengang bei Dunkelmessung

## Patentansprüche

1. Messlichtquelle umfassend einen massiven Block (01), in welchem ein Beleuchtungsraum (11), ein Lichtformungsraum (12) und ein Lichtaustrittsraum (13) jeweils als ein Hohlraum im Block (01) ausgebildet sind und eine diffus reflektierende Innenfläche besitzen; wobei der Beleuchtungsraum (11) für eine Lichtausbreitung in einer ersten Lichtausbreitungsrichtung ausgebildet ist; wobei die erste Lichtausbreitungsrichtung in einer mittleren Achse des Beleuchtungsraumes (11) liegt; wobei der Lichtaustrittsraum (13) für eine Lichtausbreitung in einer zweiten Lichtausbreitungsrichtung ausgebildet ist; wobei die zweite Lichtausbreitungsrichtung in einer mittleren Achse des Lichtaustrittsraumes (13) liegt; wobei der Beleuchtungsraum (11) in den Lichtformungsraum (12) mündet; wobei der Lichtformungsraum (12) in den Lichtaustrittsraum (13) mündet; wobei in dem Beleuchtungsraum (11) mindestens eine Lichtquelle (07) zum Erzeugen von Licht zumindest teilweise angeordnet ist; wobei der Lichtaustrittsraum (13) einen Lichtaustritt (08) aufweist; **dadurch gekennzeichnet, dass**
die mittlere Achse des Beleuchtungsraumes (11) und die mittlere Achse des Lichtaustrittsraumes (13) beabstandet zueinander angeordnet sind; und wobei der Lichtformungsraum (12) für eine Umkehr einer Lichtausbreitungsrichtung ausgebildet ist, wodurch das von dem Beleuchtungsraum (11) in den Lichtformungsraum (12) eintretende Licht bei seiner Ausbreitung durch den Lichtformungsraum (12) eine Umkehr seiner Lichtausbreitungsrichtung erfährt, sodass es mit einer umgekehrten Lichtausbreitungsrichtung vom Lichtformungsraum (12) in den Lichtaustrittsraum (13) tritt; wobei die erste Lichtausbreitungsrichtung und die zweite Lichtausbreitungsrichtung entgegengesetzt zueinander ausgerichtet sind; und wobei die erste Lichtausbreitungsrichtung und die zweite Lichtausbreitungsrichtung einen Winkel zueinander aufweisen, welcher 180°±30° beträgt.

2. Messlichtquelle nach Anspruch 1, **dadurch gekennzeichnet, dass** der Lichtformungsraum (12) den Beleuchtungsraum (11) mit dem Lichtaustrittsraum (13) U-förmig oder V-förmig verbindet.

3. Messlichtquelle nach Anspruch 1 oder 2, **dadurch gekennzeichnet, dass** die mittlere Achse des Beleuchtungsraumes (11) und die mittlere Achse des Lichtaustrittsraumes (13) parallel zueinander angeordnet sind, wobei der Beleuchtungsraum (11) und der Lichtaustrittsraum (13) eine gleiche axiale Position aufweisen.

4. Messlichtquelle nach Anspruch 3, **dadurch gekennzeichnet, dass** der Beleuchtungsraum (11), der Lichtformungsraum (12) und der Lichtaustrittsraum (13) eine U-Form oder eine V-Form ausbilden, wobei der Beleuchtungsraum (11) und der Lichtaustrittsraum (13) jeweils einen Schenkel der U-Form oder der V-Form bilden.

5. Messlichtquelle nach einem der Ansprüche 1 bis 4, **dadurch gekennzeichnet, dass** an einem Übergang von dem Lichtformungsraum (12) zu dem Lichtaustrittsraum (13) ein Homogenisatorelement (14) mit einer diffus reflektierenden Beleuchtungsfläche angeordnet ist, welches in der mittleren Achse des Lichtaustrittsraumes (13) und senkrecht zu dieser Achse angeordnet ist.

6. Messlichtquelle nach Anspruch 5, **dadurch gekennzeichnet, dass** das Homogenisatorelement (14) an einem Steg (18) angebracht ist, welcher in einer mittleren Ebene des Lichtaustrittsraumes (13) angeordnet ist.

7. Messlichtquelle nach einem der Ansprüche 1 bis 6, **dadurch gekennzeichnet, dass** der Beleuchtungsraum (11) mindestens einen Lichteintritt (06) aufweist, in welchem die mindestens eine Lichtquelle (07) zumindest teilweise angeordnet ist.

8. Messlichtquelle nach Anspruch 7, **dadurch gekennzeichnet, dass** der Beleuchtungsraum (11) zwei der Lichteintritte (06) oder zwei Gruppen der Lichteintritte (06) aufweist, welche nebeneinander angeordnet sind.

9. Messlichtquelle nach Anspruch 8, **dadurch gekennzeichnet, dass** in jedem der Lichteintritte (06) oder in jeder der Gruppen der Lichteintritte (06) mindestens eine der Lichtquellen (07) zumindest teilweise angeordnet ist.

10. Messlichtquelle nach Anspruch 9, **dadurch gekennzeichnet, dass** in einem ersten der Lichteintritte (06) oder in einer ersten der Gruppen der Lichteintritte (06) die mindestens eine Lichtquelle (07) in Form einer Halogenlampe angeordnet ist, wobei in einem zweiten der Lichteintritte (06) oder in einer zweiten der Gruppen der Lichteintritte (06) die mehreren Lichtquellen (07) in Form von mehreren LEDs angeordnet sind.

11. Messlichtquelle nach einem der Ansprüche 8 bis 10, **dadurch gekennzeichnet, dass** der massive Block (01) drei Teilblöcke (02, 03, 04) umfasst, welche fest miteinander verbunden sind, wobei eine Verbindungsebene zwischen einem ersten der drei Teilblöcke (02) und einem mittleren zweiten der drei Teilblöcke (03) den ersten Lichteintritt (06) schneidet, wobei eine Verbindungsebene zwischen dem mittleren zweiten der drei Teilblöcke (03) und einem dritten der drei Teilblöcke (04) den zweiten Lichteintritt (06) schneidet, und wobei der Lichtaustritt (08) in dem mittleren zweiten Teilblock (08) ausgebildet ist.

12. Messlichtquelle nach einem der Ansprüche 1 bis 11, **dadurch gekennzeichnet, dass** der massive Block (01) die Grundform eines Quaders besitzt, welcher zwei abgeschrägte Kanten aufweist, welche Außenflächen des Lichtformungsraumes (12) bilden.

13. Messlichtquelle nach einem der Ansprüche 1 bis 12, **dadurch gekennzeichnet, dass** der massive Block (01) Außenkanten aufweist, deren Längen nicht mehr als 90 mm betragen.

14. Messanordnung zum Erfassen eines absoluten Reflexionsspektrums einer Probe, die Messanordnung umfassend:
- eine Messlichtquelle nach einem der Ansprüche 1 bis 13;
- einen optischen Empfänger (23) zum Empfangen von Messlicht, welcher der Messlichtquelle gegenüberliegend angeordnet ist;
- einen ersten Spiegel (21), der auf einer Achse des Lichtaustrittes (08) angeordnet ist und zum Reflektieren des aus dem Lichtaustritt (08) austretenden Messlichtes ausgerichtet ist; und
- einen zweiten Spiegel (22), der auf einer Achse des optischen Empfängers (23) angeordnet ist und zum Reflektieren von reflektiertem Messlicht auf den optischen Empfänger (23) ausgerichtet ist.

## Claims

1. A measurement light source comprising a solid block (01), in which an illumination space (11), a light shaping space (12), and a light exit space (13) are each formed as a cavity in the block (01) and have a diffusely reflective inner surface; wherein the illumination space (11) is designed for light propagation in a first light propagation direction; wherein the first light propagation direction lies in a central axis of the illumination space (11); wherein the light exit space (13) is designed for light propagation in a second light propagation direction; wherein the second light propagation direction lies in a central axis of the light exits space (13); wherein the illumination space (11) opens into the light shaping space (12); wherein the light shaping space (12) opens into the light exit space (13); wherein at least one light source (07) for generating light is at least partially arranged in the illumination space (11); wherein the light exit space (13) has a light exit (08); **characterized in that** the central axis of the illumination space (11) and the central axis of the light exit space (13) are arranged at a distance from one another; and wherein the light shaping space (12) is designed for a reversal of a light propagation direction, by what the light entering the light shaping space (12) from the illumination space (11) undergoes a reversal of its light propagation direction as it propagates through the light shaping space (12), with the result that it enters the light exit space (13) from the light shaping space (12) with a reversed light propagation direction; wherein the first light propagation direction and the second light propagation direction are aligned opposite one another; and wherein the first light propagation direction and the second light propagation direction have an angle to one another that is 180°±30°.

2. The measurement light source as claimed in claim 1, **characterized in that** the light shaping space (12) connects the illumination space (11) with the light exit space (13) in a U-shaped or V-shaped manner.

3. The measurement light source as claimed in claim 1 or 2, **characterized in that** the central axis of the illumination space (11) and the central axis of the light exit space (13) are arranged parallel to one another, wherein the illumination space (11) and the light exit space (13) have the same axial position.

4. The measurement light source as claimed in claim 3, **characterized in that** the illumination space (11), the light shaping space (12) and the light exit space (13) form a U shape or a V shape, wherein the illumination space (11) and the light exit space (13) each form a leg of the U shape or the V shape.

5. The measurement light source as claimed in one of claims 1 to 4, **characterized in that** a homogenizer element (14) with a diffusely reflective illumination surface, which is arranged in the central axis of the light exit space (13) and is arranged perpendicular to that axis, is arranged at a transition from the light shaping space (12) to the light exit space (13).

6. The measurement light source as claimed in claim 5, **characterized in that** the homogenizer element (14) is mounted on a web (18), which is arranged in a central plane of the light exit space (13).

7. The measurement light source as claimed in one of claims 1 to 6, **characterized in that** the illumination space (11) has at least one light entry (06) in which the at least one light source (07) is at least partially arranged.

8. The measurement light source as claimed in claim 7, **characterized in that** the illumination space (11) has two of the light entries (06) or two groups of the light entries (06), which are arranged one next to the other.

9. The measurement light source as claimed in claim 8, **characterized in that** at least one of the light sources (07) is at least partially arranged in each of the light entries (06) or in each of the groups of the light entries (06) .

10. The measurement light source as claimed in claim 9, **characterized in that** the at least one light source (07) is arranged in the form of a halogen lamp in a first of the light entries (06) or in a first of the groups of the light entries (06), wherein the plurality of light sources (07) are arranged in the form of a plurality of LEDs in a second of the light entries (06) or in a second of the groups of the light entries (06).

11. The measurement light source as claimed in one of claims 8 to 10, **characterized in that** the solid block (01) comprises three sub-blocks (02, 03, 04), which are firmly connected to one another, wherein a connecting plane between a first of the three sub-blocks (02) and a central second of the three sub-blocks (03) intersects the first light entry (06), wherein a connecting plane between the central second of the three sub-blocks (03) and a third of the three sub-blocks (04) intersects the second light entry (06), and wherein the light exit (08) is formed in the central second sub-block (08).

12. The measurement light source as claimed in one of claims 1 to 11, **characterized in that** the solid block (01) has the basic shape of a cuboid, which has two bevelled edges that form outer surfaces of the light shaping space (12).

13. The measurement light source as claimed in one of claims 1 to 12, **characterized in that** the solid block (01) has outer edges, the lengths of which are not greater than 90 mm.

14. A measurement arrangement for capturing an absolute reflection spectrum of a sample, the measurement arrangement comprising:
- a measurement light source as claimed in one of claims 1 to 13;
- an optical receiver (23) for receiving measurement light, which is arranged opposite the measurement light source;
- a first mirror (21), which is arranged on an axis of the light exit (08) and is aligned to reflect the measurement light emerging from the light exit (08); and
- a second mirror (22), which is arranged on an axis of the optical receiver (23) and is aligned toward the optical receiver (23) for reflecting reflected measurement light.

## Revendications

1. Source de lumière de mesure comprenant un bloc massif (01), dans lequel un espace d'éclairage (11), un espace de formation de lumière (12) et un espace de sortie de lumière (13) sont respectivement constitués en bloc (01) sous la forme d'un espace creux et possèdent une surface intérieure à réflexion diffuse, sachant que l'espace d'éclairage (11) est constitué pour une propagation de lumière dans une première direction de propagation de lumière, sachant que la première direction de propagation de lumière se situe dans un axe médian de l'espace d'éclairage (11), sachant que l'espace de sortie de lumière (13) est constitué pour une propagation de lumière dans une deuxième direction de propagation de lumière, sachant que la deuxième direction de propagation de lumière se situe dans un axe médian de l'espace de sortie de lumière (13), sachant que l'espace d'éclairage (11) débouche dans l'espace de formation de lumière (12), sachant que l'espace de formation de lumière (12) débouche dans l'espace de sortie de lumière (13), sachant qu'au moins une source de lumière (07) est disposée au moins en partie dans l'espace d'éclairage (11) pour produire de la lumière, sachant que l'espace de sortie de lumière (13) comporte une sortie de lumière (08), **caractérisée en ce que** l'axe médian de l'espace d'éclairage (11) et l'axe médian de l'espace de sortie de lumière (13) sont disposés à distance l'un de l'autre et sachant que l'espace de formation de lumière (12) est constitué pour une inversion d'une direction de propagation de lumière, la lumière venant de l'espace d'éclairage (11) entrant dans l'espace de formation de lumière (12) subissant de ce fait lors de sa propagation à travers l'espace de formation de lumière (12) une inversion de sa direction de propagation de lumière de telle sorte qu'elle parvient avec une direction de propagation de lumière inversée de l'espace de formation de lumière (12) dans l'espace de sortie de lumière (13), sachant que la première direction de propagation de lumière et la deuxième direction de propagation de lumière sont orientées de façon opposée l'une à l'autre et sachant que la première direction de propagation de lumière et la deuxième direction de propagation de lumière présentent un angle l'une par rapport à l'autre, lequel est de 180° ± 30°.

2. Source de lumière de mesure selon la revendication 1, **caractérisée en ce que** l'espace de formation de lumière (12) relie l'espace d'éclairage (11) à l'espace de sortie de lumière (13) en forme de U ou en forme de V.

3. Source de lumière de mesure selon la revendication 1 ou 2, **caractérisée en ce que** l'axe médian de l'espace d'éclairage (11) et l'axe médian de l'espace de sortie de lumière (13) sont disposés parallèlement l'un par rapport à l'autre, sachant que l'espace d'éclairage (11) et l'espace de sortie de lumière (13) comportent une position axiale identique.

4. Source de lumière de mesure selon la revendication 3, **caractérisée en ce que** l'espace d'éclairage (11), l'espace de formation de lumière (12) et l'espace de sortie de lumière (13) constituent une forme de U ou une forme de V, sachant que l'espace d'éclairage (11) et l'espace de sortie de lumière (13) forment respectivement une branche en forme de U ou en forme de V.

5. Source de lumière de mesure selon l'une quelconque des revendications 1 à 4, **caractérisée en ce qu'**un élément d'homogénéisateur (14) avec une surface d'éclairage à réflexion diffuse est disposée sur un passage de l'espace de formation de lumière (12) à l'espace de sortie de lumière (13), lequel est disposé dans l'axe médian de l'espace de sortie de lumière (13) et perpendiculairement à cet axe.

6. Source de lumière de mesure selon la revendication 5, **caractérisée en ce que** l'élément d'homogénéisateur (14) est placé sur une nervure (18), laquelle est disposée dans un plan médian de l'espace de sortie de lumière (13).

7. Source de lumière de mesure selon l'une quelconque des revendications 1 à 6, **caractérisée en ce que** l'espace d'éclairage (11) comporte au moins une entrée de lumière (06), dans laquelle est disposée au moins en partie au moins une source de lumière (07).

8. Source de lumière de mesure selon la revendication 7, **caractérisée en ce que** l'espace d'éclairage (11) comporte deux des entrées de lumière (06) ou deux groupes d'entrées de lumière (06), lesquels sont disposés l'un à côté de l'autre.

9. Source de lumière de mesure selon la revendication 8, **caractérisée en ce qu'**au moins une des sources de lumière (07) est disposée au moins en partie dans chacune des sources de lumière (06) ou dans chacun des groupes d'entrées de lumière (06).

10. Source de lumière de mesure selon la revendication 9, **caractérisée en ce qu'**au moins une source de lumière (07) sous la forme d'une lampe halogène est disposée dans une première des entrées de lumière (06) ou dans un premier des groupes d'entrées de lumière (06), sachant que les nombreuses sources de lumière (07) sous la forme de plusieurs DEL (diodes électroluminescentes) sont disposées dans une deuxième des entrées de lumière (06) ou dans un deuxième des groupes des entrées de lumière (06).

11. Source de lumière de mesure selon l'une quelconque des revendications 8 à 10, **caractérisée en ce que** le bloc massif (01) comprend trois parties de bloc (02, 03, 04), lesquelles sont reliées fermement entre elles, sachant qu'un plan de liaison coupe la première entrée de lumière (06) entre une première des trois parties de bloc (02) et une deuxième partie médiane des trois parties de bloc (03), sachant qu'un plan de liaison coupe la deuxième entrée de lumière (06) entre la deuxième partie médiane des trois parties de bloc (03) et une troisième partie médiane des trois parties de bloc (04) et sachant que la sortie de lumière (08) est constituée dans la deuxième partie de bloc médiane (08) .

12. Source de lumière de mesure selon l'une quelconque des revendications 1 à 11, **caractérisée en ce que** le bloc massif (01) possède la forme de base d'un parallélépipède, lequel comporte deux arêtes chanfreinées, lesquelles forment des surfaces extérieures de l'espace de formation de lumière (12).

13. Source de lumière de mesure selon l'une quelconque des revendications 1 à 12, **caractérisée en ce que** le bloc massif (01) comporte des arêtes extérieures, dont les longueurs ne comportent pas plus de 90 mm.

14. Système de mesure destiné à la saisie d'un spectre de réflexion absolu d'un échantillon, le système de mesure comprenant :
- une source de lumière de mesure selon l'une quelconque des revendications 1 à 13,
- un récepteur optique (23) pour la réception de lumière de mesure, lequel est disposé opposé à la source de lumière de mesure,
- un premier miroir (21), qui est disposé sur un axe de la sortie de lumière (08) et est orienté pour réfléchir la lumière de mesure sortant de la sortie de lumière (08), et
- un deuxième miroir (22), qui est disposé sur un axe du récepteur optique (23) et est orienté pour réfléchir de la lumière de mesuré réfléchie sur le récepteur optique (23).
